# EUROPÄISCHE PATENTANMELDUNG

(11) **EP 1 306 472 A1**
(43) Veröffentlichungstag der Anmeldung: **02.05.2003**
(21) Anmeldenummer: 02023500.8
(22) Anmeldetag: 22.10.2002
(51) Int. Cl.: D02J 13/00, G01K 13/08

(54) **Vorrichtung zur Messung der Temperatur eines beweglichen Maschinenelements, insbesondere der Galette einer Spinnereimaschine**

(30) Priorität: 25.10.2001 DE 10152619
(71) Anmelder: Zinser Synthetics GmbH, 73058 Ebersbach/Fils (DE)
(72) Erfinder: Meier, Klaus, Dr., 73054 Eislingen (DE)

(57) **Zusammenfassung**

Die Erfindung betrifft eine Vorrichtung zur Messung der Temperatur eines beweglichen Maschinenelements, insbesondere der Galette einer Spinnereimaschine, mit einem Temperatursensor (13), welcher mittels eines ortsfesten, am Maschinengehäuse oder einem damit verbunden Teil (17) der Maschine befestigten Halte- und/oder Schutzelements (11) in einem Spalt (5) oder einer Ausnehmung des beweglichen Maschinenelement (3) gehalten ist, wobei das Halte- und/oder Schutzelement (11) oder die Halterung (15) des Halte- und/oder Schutzelement (11) so ausgebildet sind, dass sich ein hoher Wärmeleitwiderstand zwischen dem Temperatursensor (13) und dem Maschinengehäuse (17) oder dem damit verbundenen Teil ergibt.

## Beschreibung

Die Erfindung betrifft eine Vorrichtung zur Messung der Temperatur eines beweglichen Maschinenelements, insbesondere der Galette einer Spinnereimaschine, mit den Merkmalen des Oberbegriffs des Patentanspruchs 1.

Bei Galetten für den Einsatz in Streckspul- und Streckzwirnmaschinen erfolgt die Temperaturmessung zur Regelung der Oberflächentemperatur aus Kostengründen üblicherweise mittels ortsfest gehaltener Temperatursensoren, die in einen Spalt des Galettenmantels ragen. Neben den geringen Kosten zur Realisierung dieses Messprinzips weist dieses eine sehr gute zeitliche Konstanz hinsichtlich der erfassten Temperatur auf. Der Hauptnachteil dieses Prinzips liegt in der relativ großen Streuung von Aggregat zu Aggregat, die bis zu 10 K erreichen kann. Diese große Streuung führt dazu, dass vor Inbetriebnahme einer Streckspul- oder Streckzwirnmaschine die tatsächliche Temperatur jeder einzelnen Galette erfasst werden muss und der Messwert gegebenenfalls mit einem entsprechenden Offset abgeglichen werden muss. Ein derartiges Verfahren ist beispielsweise in der DE 195 13 951 A1 beschrieben.

Die Prozedur des Abgleichens der Temperaturmessvorrichtung erfordert einen entsprechenden zeitlichen Aufwand und muss zudem nicht nur vor der ersten Inbetriebnahme einer derartigen Maschine, sondern in regelmäßigen Abständen wiederholt werden.

Der Erfindung liegt daher die Aufgabe zugrunde, eine Vorrichtung zur Messung der Temperatur eines beweglichen Maschinenelements, insbesondere der Galette einer Spinnereimaschine, zu schaffen, bei der geringere Streuungen der erfassten Temperatur von Aggregat zu Aggregat auftreten, so dass gegebenenfalls auch auf einen Abgleich jedes Aggregats verzichtet werden kann.

Die Erfindung löst diese Aufgabe mit den Merkmalen des Patentanspruchs 1.

Die Erfindung geht von der Erkenntnis aus, dass der wesentliche Grund für die Streuungen der erfassten Temperatur von Aggregat zu Aggregat in der Halterung des Sensors und den daraus resultierenden Wärmeflüssen liegt. Die Temperatursensoren sind bei Streckspul- und Streckzwirnmaschinen meist als Pt100-Messfühler ausgebildet. Diese sind in einem einseitig geschlossenen Rohr im Bereich der geschlossenen Öffnung des Rohrs angeordnet, um zu vermeiden, dass Präparationsdämpfe, wie sie bei der Herstellung von Kunstfasern entstehen, den Messfühler angreifen. Das Rohr ist mit seinem anderen Ende ortsfest im Maschinengehäuse oder in einem damit verbundenen Teil gehalten. Die um das ortsfest gehaltene und in den ringförmigen Spalt ragende Rohr befindliche Luft weist bei einer Rotation der Galette hohe Turbulenzen auf, wodurch eine sehr gute Wärmeübertragung vom Galettenmantel auf das Messfühlergehäuse, d. h. das Rohr gegeben ist. Hier teilen sich die Wärmeströme auf, wobei ein Teil der Wärme zum Temperatursensor gelangt und der verbleibende Teil aufgrund des Temperaturgefälles über das Rohr zum Maschinengehäuse hin abgeleitet wird. Dies führt abhängig von der Temperaturdifferenz zwischen dem Galettenmantel und dem Maschinengehäuse zu einer Verfälschung der erfassten Ist-Temperatur.

Erfindungsgemäß wird daher das Halte- und/oder Schutzelement oder dessen Halterung so ausgebildet, dass sich ein hoher Wärmeleitwiderstand zwischen dem Temperatursensor und dem Maschinengehäuse oder dem damit verbundenen Teil ergibt.

Nach einer Ausführungsform der Erfindung kann das Halte- und/oder Schutzelement in einem mit der Maschine verbindbaren oder verbundenen Teil gehalten sein, welches aus einem schlecht wärmeleitenden Material besteht.

In gleicher Weise oder zusätzlich kann das Halte- und/oder Schutzelement zumindest in einem Teilbereich aus einem schlecht wärmeleitenden Material bestehen.

Als schlecht wärmeleitendes Material kann beispielsweise ein geeigneter Kunststoff, Keramik oder Glas eingesetzt werden.

Nach einer weiteren Ausführungsform der Erfindung kann das Halte- und/oder Schutzelement in wenigstens einem Teilbereich in seinem Querschnitt so ausgebildet sein, dass sich ein hoher Wärmeleitwiderstand in Richtung auf das Maschinengehäuse oder das damit verbundene Teil ergibt.

Das Halte- und/oder Schutzelement kann als einseitig geschlossenes Rohr ausgebildet sein, wobei der Temperatursensor im Bereich des geschlossenen Endes des Rohrs gehalten ist. Das Rohr besteht zumindest in dem Bereich, in dem der Sensor gehalten ist, aus einem gut wärmeleitenden Material, vorzugsweise aus Metall.

In bevorzugter Weise ist der Temperatursensor gut wärmeleitend mit der Innenwandung des Rohrs verbunden, beispielsweise durch unmittelbare Berührung der Außenwandung des Sensors und/oder mittels eines gut wärmeleitenden Klebers. Sofern der Sensor dies zulässt, kann selbstverständlich auch ein Verlöten oder Verschweißen erfolgen.

Nach einer weiteren Ausführungsform der Erfindung kann der Temperatursensor auch am vorderen Ende eines Halteelements befestigt sein. In diesem Fall muss der Sensor selbstverständlich so beschaffen sein, dass er durch möglicherweise entstehende Präparationsdämpfe oder andere Umwelteinflüsse nicht beschädigt wird.

Weitere Ausführungsformen der Erfindung ergeben sich aus den Unteransprüchen.

Die Erfindung wird nachfolgend anhand in der Zeichnung dargestellter Ausführungsbeispiele näher erläutert. In der Zeichnung zeigen:
- Fig. 1: eine erste Ausführungsform einer Temperaturmessvorrichtung nach der Erfindung mit einem lose in einem Rohr angeordneten Temperatursensor;
- Fig. 2: eine zweite Ausführungsform einer Temperaturmessvorrichtung nach der Erfindung analog Fig. 1, jedoch mit wärmeleitend eingebettetem Sensor und
- Fig. 3: eine dritte Ausführungsform der Temperaturmessvorrichtung nach der Erfindung mit einem frei im Spalt gehaltenen Sensor.

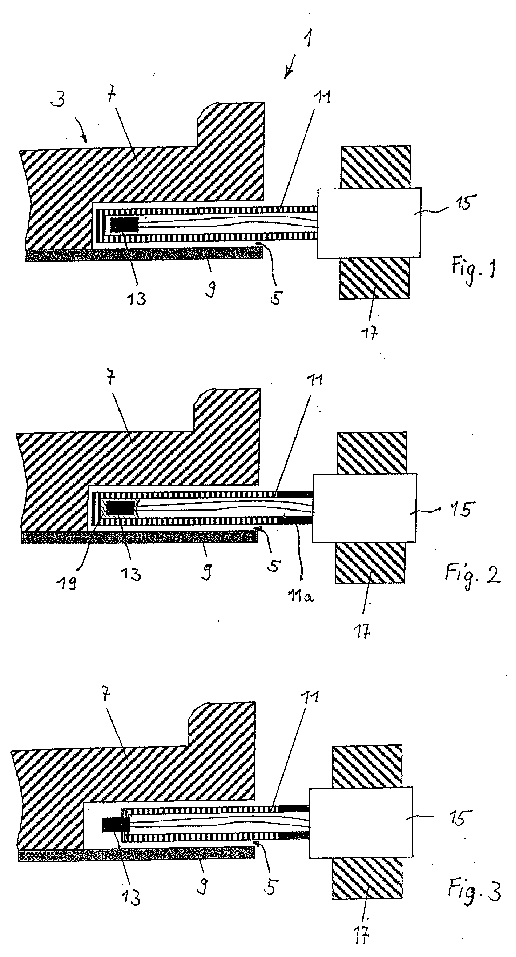

Die Erfindung wird im Folgenden anhand der Figuren 1 bis 3 am Beispiel einer Galette für den Einsatz in einer Streckspul- oder Streckzwirnmaschine näher erläutert.

Fig. 1 zeigt die für die Erfindung wesentlichen Komponenten eines Galettenaggregats 1 einer derartigen Maschine, welches eine Galette 3, d. h. das rotierend angetriebene topfförmige Teil des Galettenaggregats 1 und einen nicht näher dargestellten Antrieb umfasst. In einen Ringspalt 5 zwischen einer Ausnehmung des Galettenmantels 7 und dem Kurzschlussring 9, welcher Bestandteil der Induktionsheizung für die Galette 3 ist, ragt ein Halte- und/oder Schutzelement 11 in welchem ein Temperatursensor 13 angeordnet ist.

Das Halte- und/oder Schutzelement 11 kann, wie in Fig. 1 dargestellt, als einseitig geschlossenes Rohr ausgebildet sein. Im vorderen, geschlossenen Bereich des Rohrs ist der Temperatursensor 13 angeordnet. Der Temperatursensor 13 kann beispielsweise als Pt100-Messfühler oder als Thermoelement ausgebildet sein. Bei der Ausführungsform nach Fig. 1 is der Temperatursensor 13 lediglich lose im vorderen Bereich des Halteund/oder Schutzelements 11 angeordnet.

Das rohrförmige Halte- und/oder Schutzelement 11 ist in einem Teil 15 gehalten, welches seinerseits mit dem Chassis 17 des Galettenaggregats 1 bzw. dem Gehäuse der Streckspul- oder Streckzwirnmaschine verbunden ist. Selbstverständlich kann das Teil 15 auch in einem mit dem Chassis bzw. mit dem Gehäuse verbundenen Teil gehalten sein.

Bei der Ausführungsform nach Fig. 1 besteht das Teil 15 aus einem schlecht wärmeleitenden Material, beispielsweise aus einem geeigneten Kunststoff, Keramik oder Glas.

Hierdurch wird erreicht, dass der vom Galettenmantel 7 zum Halte- und/oder Schutzelement 11 gelangende Wärmestrom praktisch vollständig zum Temperatursensor 13 gelangt und allenfalls ein vernachlässigbar geringer Wärmestrom über das Teil 15 auf das Chassis 17 übertritt. Ein im Stand der Technik auftretender Wärmestrom auf das Chassis 17, der abhängig ist von der Temperaturdifferenz zwischen der Temperatur des Galettenmantels 7 und der Temperatur des Chassis 17 und demzufolge den Verlauf der Kennlinie der erfassten Temperatur abhängig von der tatsächlichen Ist-Temperatur beeinflusst, wird praktisch vollständig vermieden. Die Erfassung der Temperatur erfolgt somit über den gesamten interessierenden Temperaturbereich mit wesentlich höherer Genauigkeit. Zudem ergibt sich eine wesentlich geringere Streuung von Aggregat zu Aggregat die durch unterschiedliche Einbaupositionen des Sensors 13 im Halteund/oder Schutzelement 11 bzw. durch unterschiedliche Positionen des Halte- und/oder Schutzelements 11 im Ringspalt 5 verursacht wird.

Bei der Ausführungsform in Fig. 2 ist der Sensor 13 mittels eines hoch wärmeleitenden Klebers 19 in seiner Position im vorderen Bereich des rohrförmigen Halte- und/oder Schutzelements 11 fixiert. Hierdurch ergibt sich ein verbesserter Wärmeübergang vom Halte- und/oder Schutzelement 11 auf den Sensor 13. Demzufolge ergibt sich eine weitere Reduzierung der Streuung von Aggregat zu Aggregat, da der Wärmeübergang zwischen Galettenmantel und Temperatursensor wesentlich definierter erfolgt. Bei der in Fig. 2 dargestellten Ausführungsform besteht das Halte- und/oder Schutzelement 11 in seinem rückwärtigen Bereich 11a aus einem schlecht wärmeleitenden Material, beispielsweise einem geeigneten Kunststoff, Keramik oder Glas. Das Teil 15 kann in diesem Fall auch aus einem gut wärmeleitenden Material bestehen. Der erforderliche hohe Wärmeleitwiderstand zwischen dem vorderen Bereich des Halte- und/oder Schutzelements 11 und dem Chassis 17 wird in diesem Fall durch den Bereich 11a realisiert.

Zur Vereinfachung der Herstellung kann das Halte- und/oder Schutzelement 11 in seinem vorderen Bereich aus einem Metallröhrchen bestehen und in seinem rückwärtigen Bereich aus einem weiteren, jedoch aus einem schlecht wärmeleitenden Material bestehenden Röhrchen, das über das vordere Röhrchen geschoben und mit diesem verbunden ist.

Durch die Kombination eines hohen Wärmeleitwiderstands vom Sensor 13 bzw. vom vorderen Bereich- und/oder Schutzelements 11 auf das Chassis 17 bzw. das Teil 15 und die zusätzliche wärmeleitende Einbettung des Sensors 13 führt zu einer äußerst geringen Streuung der erfassten Temperaturen bei unterschiedlichen Aggregaten.

Bei der in Fig. 3 dargestellten Ausführungsform sind das Halte- und/oder Schutzelement 11 und das Teil 15 analog zu der Ausführungsform gemäß Fig. 2 ausgebildet. Der Temperatursensor 13 ist jedoch nicht innerhalb des Halte- und/oder Schutzelements 11 gehalten, sondern ragt mit seinem wesentlichen, für die Erfassung der temperaturmaßgeblichen Teil an der Stirnseite des rohrförmigen Elements 11 heraus, das in diesem Fall lediglich als Halteelement wirkt. Der Temperatursensor muss in diesem Fall selbstverständlich so beschaffen sein, dass er ausreichend unempfindlich gegenüber Umwelteinflüssen ist, die im Ringspalt 5 auftreten. Beispielsweise muss er bei Streckspul- oder Streckzwirnmaschinen unempfindlich gegen Präparationsdämpfe sein, die bei der Herstellung von Kunstfasern auftreten. In diesem Fall kann der Temperatursensor 13 beispielsweise als Thermoelement aus NiCrNi sein.

In einer nicht dargestellten Variante analog Fig. 3 kann das gesamte Halte- und/oder Schutzelement 11 aus einem schlecht wärmleitenden Material bestehen, da der Sensor 13 unmittelbar dem Ort ausgesetzt ist, an dem die Temperatur erfasst werden soll.

Auch mit diesen Ausführungsbeispielen ergeben sich hervorragende Ergebnisse hinsichtlich der Streuung von Aggregat zu Aggregat.

## Patentansprüche

1. Vorrichtung zur Messung der Temperatur eines beweglichen Maschinenelements, insbesondere der Galette einer Spinnereimaschine,
a) mit einem Temperatursensor (13), welcher mittels eines ortsfesten, am Maschinengehäuse oder einem damit verbunden Teil (17) der Maschine befestigten Halte- und/oder Schutzelements (11) in einem Spalt (5) oder einer Ausnehmung des beweglichen Maschinenelement (3) gehalten ist,
**dadurch gekennzeichnet**,
b) dass das Halte- und/oder Schutzelement (11) und/oder die Halterung (15, 17) des Halte- und/oder Schutzelement (11) so ausgebildet sind, dass sich ein hoher Wärmeleitwiderstand zwischen dem Temperatursensor (13) und dem Maschinengehäuse (17) oder dem damit verbundenen Teil ergibt.

2. Vorrichtung nach Anspruch 1, **dadurch gekennzeichnet, dass** das Halteund/oder Schutzelement (11) in einem mit der Maschine verbindbaren oder verbundenen Teil (15) gehalten ist, welches aus einem schlecht wärmeleitenden Material besteht.

3. Vorrichtung nach Anspruch 1 oder 2, **dadurch gekennzeichnet, dass** das Halteund/oder Schutzelement (11) zumindest in einem Teilbereich aus einem schlecht wärmeleitenden Material besteht.

4. Vorrichtung nach Anspruch 2 oder 3, **dadurch gekennzeichnet, dass** das schlecht wärmeleitende Material ein geeigneter Kunststoff, Keramik oder Glas ist.

5. Vorrichtung nach einem der vorhergehenden Ansprüche, **dadurch gekennzeichnet, dass** das Halte- und/oder Schutzelement (11) in wenigstens einem Teilbereich in seinem Querschnitt so ausgebildet ist, dass sich ein hoher Wärmeleitwiderstand in Richtung auf das Maschinengehäuse (17) oder das damit verbundenen Teil ergibt.

6. Vorrichtung nach einem der vorhergehenden Ansprüche, **dadurch gekennzeichnet, dass** das Halte- und/oder Schutzelement (11) als einseitig geschlossenes Rohr ausgebildet ist und dass der Temperatursensor (13) im Bereich (11a) des geschlossenen Endes des Rohrs gehalten ist und dass das Rohr zumindest in diesem Bereich aus einem gut wärmeleitenden Material, vorzugsweise aus einem Metall, besteht.

7. Vorrichtung nach Anspruch 6, **dadurch gekennzeichnet, dass** der Temperatursensor (13) gut wärmeleitend mit der Innenwandung des Rohrs (11) verbunden ist, vorzugsweise durch unmittelbare Berührung der Außenwandung des Sensors (13) und/oder mittels eines gut wärmeleitenden Klebers.

8. Vorrichtung nach einem der Ansprüche 1 bis 5, **dadurch gekennzeichnet, dass** der Temperatursensor (13) am vorderen Ende eines Halteelements (11) befestigt ist.

9. Vorrichtung nach Anspruch 9, **dadurch gekennzeichnet, dass** der Temperatursensor als Thermoelement (13) mit einer gegen Umwelteinflüsse, insbesondere Präparationsdämpfe bei der Herstellung von Kunstfasern, unempfindlichen Außenwandung ausgebildet ist.
